# EUROPEAN PATENT SPECIFICATION

(11) **EP 3 412 404 B1**
(45) Date of publication and mention of the grant of the patent: **16.09.2020**
(21) Application number: 17827532.7
(22) Date of filing: 06.07.2017
(51) Int. Cl.: B23Q 7/00, B65G 15/42, B65G 35/08, B23Q 7/14

(54) **PALLET TRANSPORT DEVICE AND PALLET TRANSPORT METHOD**
PALETTENTRANSPORTVORRICHTUNG UND PALETTENTRANSPORTVERFAHREN
DISPOSITIF DE TRANSPORT DE PALETTE ET PROCÉDÉ DE TRANSPORT DE PALETTE

(30) Priority: 13.07.2016 JP 2016138219
(43) Date of publication of application: 12.12.2018
(73) Proprietor: NITTOKU Co., Ltd., Saitama-city, Saitama (JP)
(72) Inventor: KATAHIRA, Koji, Fukushima-shi Fukushima 960-1393 (JP); MUTO, Kenichi, Fukushima-shi Fukushima 960-1393 (JP)
(74) Representative: Grünecker Patent- und Rechtsanwälte PartG mbB
(86) International application number: PCT/JP2017/024855
(87) International publication number: WO 2018/012404

(56) References cited:
- EP-A1- 1 746 052
- EP-A1- 2 316 758
- WO-A2-03/020616
- JP-A- S5 415 279
- JP-A- S6 312 509
- JP-A- H02 215 609

## Description

### TECHNICAL FIELD

The present invention relates to a pallet conveying apparatus and a pallet conveying method according to the preambles of claims 1 and 5 (see for example EP-2316758-A).

### BACKGROUND ART

Conventionally, a conveying apparatus is known which conveys works in a manufacturing line. At a conveyance destination of works, machine tools perform predetermined processings on the works.

The present applicant has proposed a pallet conveying apparatus for conveying a plurality of pallets for carrying works in a circulating manner with respect to machine tools (see JP2011-93032A).

The above conveying apparatus includes a guide rail, an endless circulation belt provided along the guide rail and one, two or more pallets movably mounted on the guide rail.

By locking the pallet to the circulation belt and circulating the circulation belt, the pallet is conveyed while being mounted on the guide rail.

### SUMMARY OF INVENTION

However, a moving speed of the pallet locked to the circulation belt and moving on the guide rail by the circulation of the circulation belt is equal to a circulation speed of the circulation belt. Thus, it has been impossible to convey the pallet at a speed beyond the circulation speed of the circulation belt.

It is an object of the present invention to provide a pallet conveying apparatus capable of increasing a conveying speed of a pallet beyond a circulation speed of a circulation belt.

According to one aspect of the present invention, a pallet conveying apparatus includes a guide rail, an endless first belt provided along the guide rail, and one, two or more pallets movably mounted on the guide rail, the pallet including locking means to be locked to the first belt, wherein the pallet mounted on the guide rail is conveyed while being locked to the circulating first belt, the locking means is a pulley configured to roll by having an outer periphery held in contact with the first belt or an endless second belt configured to circulate while partially overlapping the first belt, and a motor configured to rotate the pulley or circulate the second belt is provided on the pallet.

According to another aspect of the present invention, a pallet conveying method for conveying a pallet mounted on a guide rail while locking the pallet to a circulating endless first belt provided along the guide rail, includes locking the pallet to the first belt with an outer periphery of a pulley provided on the pallet held in contact with the first belt or with a part of an endless second belt provided on the pallet overlapped on the first belt, and self-propelling the pallet by rotating the pulley or circulating the second belt along with or separately from the circulation of the first belt.

### BRIEF DESCRIPTION OF DRAWINGS

FIG. 1 is a plan view of a pallet conveying apparatus according to an embodiment of the present invention,
FIG. 2 is a front view of the pallet conveying apparatus,
FIG. 3 is an enlarged view of a part III of FIG. 2,
FIG. 4 is a sectional view along IV-IV of FIG. 2,
FIG. 5 is a sectional view along V-V of FIG. 2,
FIG. 6 is a sectional view along VI-VI of FIG. 1 showing a pallet being moved,
FIG. 7 is a view showing a state where the pallet is conveyed and mounted on a first movable rail at a first position from an end part of a first guide rail,
FIG. 8 is a view showing a state where the first movable rail is moved to a second position continuous with a second guide rail together with the mounted pallet and the pallet is moved to the second guide rail,
FIG. 9 is a view showing a state where the pallet is conveyed and mounted on a second movable rail at a second position from an end part of the second guide rail,
FIG. 10 is a view showing a state where the second movable rail is moved to a first position continuous with the first guide rail together with the mounted pallet and the pallet is moved to the first guide rail, and
FIG. 11 is a view showing a pallet in the case where locking means is a pulley.

### DESCRIPTION OF EMBODIMENT

Hereinafter, a pallet conveying apparatus 10 according to an embodiment of the present invention is described with reference to the accompanying drawings.

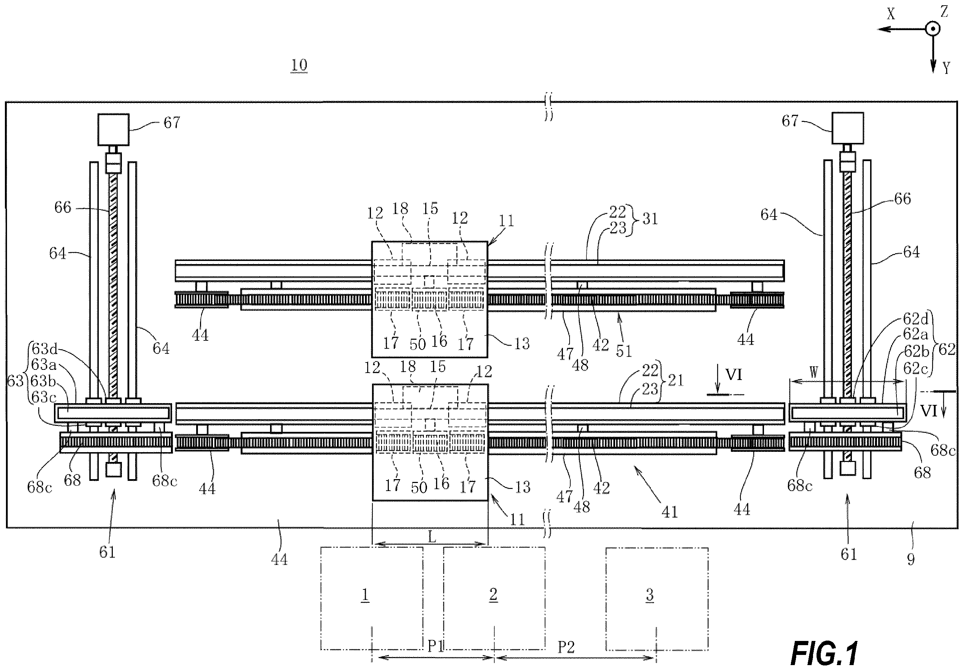

FIG. 1 is a plan view of the pallet conveying apparatus according to the embodiment of the present invention. It should be noted that three axes of X, Y and Z orthogonal to each other are set in each figure. The configuration of the pallet conveying apparatus 10 is described, assuming that the X axis extends in a substantially horizontal lateral direction, the Y axis extends in a substantially horizontal front-back direction and the Z axis extends in a vertical direction.

In the pallet conveying apparatus 10, pallets 11 carrying works (not shown) are movably mounted on first and second guide rails 21, 31 and conveyed along the first and second guide rails 21, 31.

In the present embodiment, a case is described where the pallet conveying apparatus 10 includes the first and second guide rails 21, 31 provided in parallel to each other at a predetermined distance from each other in a horizontal direction (Y-axis direction) as guide rails on which the pallets 11 are movably mounted.

In the present embodiment, a case is described where three machine tools 1 to 3 are provided along the first guide rail 21 and no machine tool is provided around the second guide rail 31. This is an example, the number of the machine tools differs depending on works required to be processed and machine tool(s) may be provided around the second guide rail 31. Further, the number of the pallets 11 are appropriately increased and decreased according to the number of the machine tools.

The pallets 11 are movably mounted on the first and second guide rails 21, 31. The first and second guide rails 21, 31 are respectively provided to extend straight in an X-axis direction on a mount 9 and the pallets 11 mounted thereon move. Specifically, the pallets 11 are conveyed.

Since the first and second guide rails 21, 31 have the same structure, the first guide rail 21 is described as a representative.

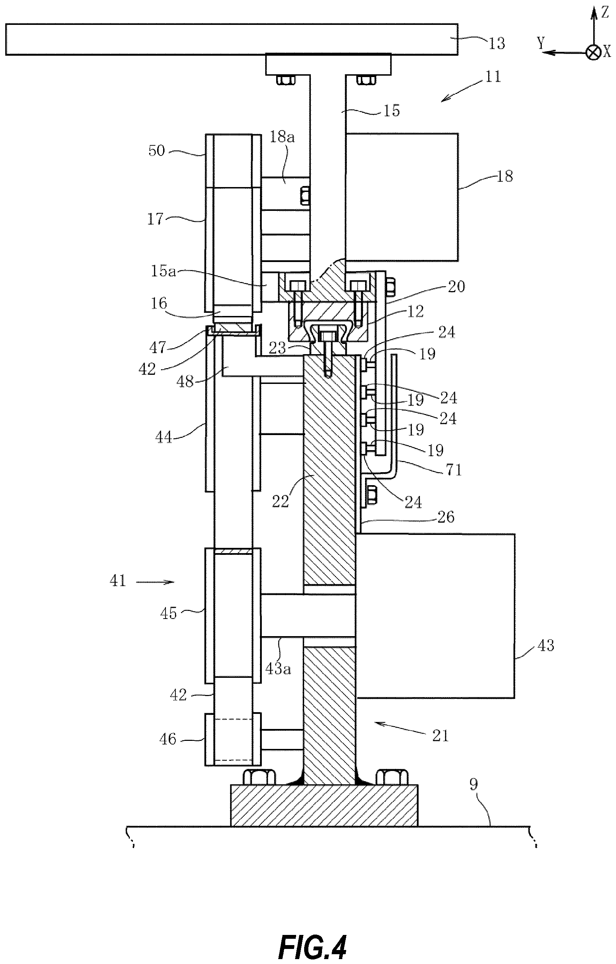

The pallet 11 is mounted in a horizontal state on the first guide rail 21. The first guide rail 21 includes, as shown in FIG. 4, a supporting plate 22 directly fixed to the mount 9 and a commercially available linear motion guide rail 23 fixed to the upper edge of the supporting plate 22 by screwing.

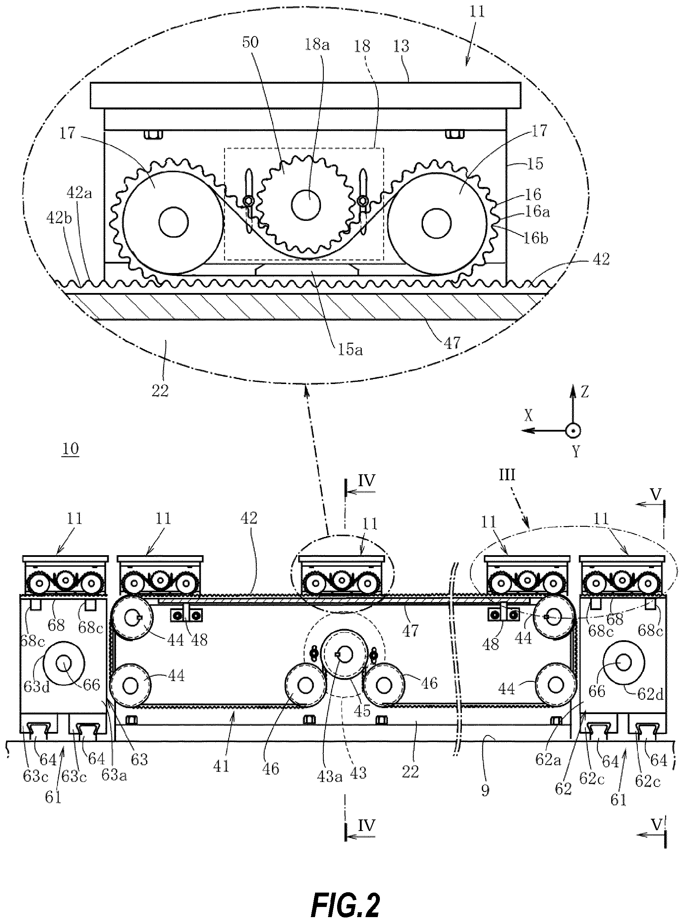

As shown in FIGS. 1 and 2, the pallet conveying apparatus 10 of the present embodiment includes first pallet feeding means 41 for conveying the pallet 11 mounted on the first guide rail 21 along the first guide rail 21 and second pallet feeding means 51 (see FIG. 1) for conveying the pallet 11 mounted on the second guide rail 31 along the second guide rail 31.

Since the first and second pallet feeding means 41, 51 have the same structure, the first pallet feeding means 41 is described as a representative.

The first pallet feeding means 41 includes a circulation belt 42 serving as an endless first belt configured to be engageable with the pallet 11 and provided along the first guide rail 21, and a servo motor 43 (see FIG. 2) serving as a circulation mechanism for circulating the circulation belt 42.

As shown in FIG. 2, driven pulleys 44 are provided on four corners of the supporting plate 22 in the first guide rail 21. The circulation belt 42 is wound to enclose these four driven pulleys 44.

Further, the servo motor 43 serving as the circulation mechanism for circulating the circulation belt 42 is provided on the supporting plate 22, and a drive pulley 45 is mounted on a rotary shaft 43a of the servo motor 43.

The drive pulley 45 is provided on the same plane as the four driven pulleys 44. Further, a pair of turning pulleys 46 for turning the circulation belt 42 to mount the circulation belt 42 on the drive pulley 45 are rotatably supported by the supporting plate 22 near the drive pulley 45.

When the servo motor 43 is driven in response to a command from a control device (not shown), the rotary shaft 43a rotates together with the drive pulley 45 and the circulation belt 42 mounted on the drive pulley 45 circulates while enclosing the four driven pulleys 44.

The control device is configured, for example, by a microcomputer including a central processing unit (CPU), a read-only memory (ROM), a random access memory (RAM) and an input/output interface (I/O interface). The control device can also be configured by a plurality of microcomputers.

As shown in FIGS. 1, 2 and 4, the pallet 11 to be mounted on the first and second guide rails 21, 31 includes linear motion blocks 12 configured to be movable on the first and second guide rails 21, 31 across a linear motion guide rail 23, a base 15 having the linear motion blocks 12 provided on a lower part, a horizontal pedestal 13 screwed to an upper part of the base 15, and a short belt 16 serving as a second belt provided on the base 15 and functioning as locking means to be locked to the circulation belt 42.

The linear motion blocks 12 are commercially available ones sold in pair with the linear motion guide rail 23 and preferably include roller retainers (not shown).

By using the linear motion blocks 12 including the roller retainers, a movement in a width direction (Y-axis direction) and tilting with respect to the first and second guide rails 21, 31 can be regulated. In this way, resistance generated when the pallet 11 moves on the first and second guide rails 21, 31 can be drastically reduced.

By movably supporting such linear motion blocks 12 across the linear motion guide rail 23 in the first and second guide rails 21, 31, the pallet 11 is movably mounted on the first and second guide rails 21, 31 with the pedestal 13 kept in a horizontal state.

Here, as shown in FIG. 1, the pedestal 13 in the pallet 11 is preferably formed such that a length L in the X-axis direction is equal to or shorter than a shortest pitch P1 between the machine tools 1 to 3.

As shown in an enlarged view of FIG. 2, the locking means of the present embodiment is the endless short belt 16 configured to circulate while partially overlapping the circulation belts 42 in the pallet feeding means 41, 51.

Auxiliary pulleys 17 are respectively provided on both sides of the base 15 in the pallet 11 in a conveying direction (X-axis direction) and the short belt 16 is mounted on these auxiliary pulleys 17.

The circulation belt 42 in the present embodiment is a so-called toothed belt in which projections and recesses 42a, 42b extending in the width direction are alternately formed one after another in a longitudinal direction.

On the other hand, the short belt 16 partially overlapping the circulation belt 42 is also a so-called toothed belt similar to the circulation belt 42. The short belt 16 is formed with projections and recesses 16a, 16b extending in the width direction and alternately formed one after another in a longitudinal direction as meshing teeth to be meshed with the recesses and projections 42b, 42a of the circulation belt 42 (see FIG. 2).

When the short belt 16 overlaps the circulation belt 42, the projections and recesses 42a, 42b formed on the circulation belt 42 are engaged with the recesses and projections 16b, 16a formed on the short belt 16 to eliminate slippage between the both.

Specifically, when the short belt 16 overlaps the circulation belt 42, the projections and recesses 16a, 16b formed on the short belt 16 are meshed with the recesses and projections 42b, 42a of the circulation belt 42. In this way, the pallet 11 can be locked to the circulation belt 42.

Further, the pallet 11 includes a pressing member 15a. The pressing member 15a is integrally formed to the base 15 to overlap a part of the short belt 16 overlapping the circulation belt 42.

The pressing member 15a prevents a part of the short belt 16 overlapping the circulation belt 42 from being curved to separate and disengage the projections and recesses 16a, 16b on the short belt 16 engaged with the recesses and projections 42b, 42a of the circulation belt 42 from the recesses and projections 42b, 42a.

If the projections and recesses 16a, 16b on the short belt 16 are engaged with the recesses and projections 42b, 42a of the circulation belt 42 to prohibit the circulation of the short belt 16, a movement in the X-axis direction of the pallet 11 independent of the circulation belt 42 is prohibited.

Accordingly, if the servo motor 43 is driven to circulate the circulation belt 42 with the circulation of the short belt 16 prohibited, the pallet 11 moves together with the circulation belt 42. In this way, the pallet 11 is conveyed along the first and second guide rails 21, 31 along which the circulation belt 42 extends.

Here, reference sign 47 of FIG. 2 denotes a supporting member 47 for preventing the slackening of the circulation belt 42 between the driven pulleys 44 and preventing the separation of the circulation belt 42 from the short belt 16. Further, reference sign 48 denotes a fixture 48 for mounting the supporting member 47 on the supporting member 22.

The pallet 11 is provided with a self-propelled motor 18 for circulating the short belt 16. The self-propelled motor 18 is provided on the base 15 between a pair of the auxiliary pulleys 17, 17. A drive pulley 50 on which the short belt 16 is mounted is mounted on a rotary shaft 18a of the self-propelled motor 18.

The self-propelled motor 18 is screwed to the base 15 movably in a direction perpendicular to a straight line connecting the pair of auxiliary pulleys 17, 17. By moving the self-propelled motor 18 to change the position of the drive pulley 50, tension applied to the short belt 16 can be adjusted.

When the self-propelled motor 18 is driven in response to a command from the control device, the rotary shaft 18a rotates together with the drive pulley 50. In this way, the short belt 16 mounted on the drive pulley 50 circulates while being mounted on the pair of auxiliary pulleys 17, 17.

Here, with the projections and recesses 16a, 16b on the short belt 16 engaged with the recesses and projections 42b, 42a of the circulation belt 42, a movement in the X-axis direction of the pallet 11 independent of the circulation belt 42 is prohibited.

Thus, if the short belt 16 is circulated by driving the self-propelled motor 18, the short belt 16 rolls and moves on the circulation belt 42 while partially overlapping the circulation belt 42.

Because of this, if the short belt 16 is circulated, the pallet 11 is self-propelled to move along the first and second guide rails 21, 31, along which the circulation belt 42 extends, even if the circulation belt 42 is not circulated.

As shown in FIG. 1, pallet moving means 61 are provided at both end parts of the first and second guide rails 21, 31.

The pallet moving means 61 moves the pallet 11 mounted on either one of the first and second guide rails 21, 31 to the other.

In the present embodiment, a case where the pallet 11 mounted on the first guide rail 21 is moved to the second guide rail 31 and a case where the pallet 11 mounted on the second guide rail 31 is moved to the first guide rail 21 are described.

The pallet moving means 61 includes a first movable rail 62 configured to be able to reciprocate between a first position continuous with one end part of the first guide rail 21 and a second position continuous with one end part of the second guide rail 31 while having the pallet 11 mounted thereon and a second movable rail 63 configured to be able to reciprocate between a first position continuous with the other end part of the first guide rail 21 and a second position continuous with the other end part of the second guide rail 31 while having the pallet 11 mounted thereon.

The first and second movable rails 62, 63 have the same structure. Each of the first and second movable rails 62, 63 includes a movable table 62a, 63a continuous with the supporting plate 22 of the first guide rail 21 at the first position thereof and continuous with the supporting plate 22 of the second guide rail 31 at the second position thereof, a short rail 62b, 63b provided on the upper edge of the movable table 62a, 63a and linear motion blocks 62c, 63c configured to move on moving guide rails 64 provided on a lower part of the movable table 62a, 63a. The moving guide rails 64 are described later.

The short rails 62b, 63b used are the same as the linear motion guide rails 23 in the first and second guide rails 21, 31.

A length W (see FIG. 1) of the short rail 62b, 63b is equal to or longer than the length L of the pallet 11 in the X-axis direction.

The short rail 62b, 63b is arranged on the upper edge of the movable table 62a, 63a to be continuous with the linear motion guide rail 23 in the first guide rail 21 at the first position and continuous with the linear motion guide rail 23 in the second guide rail 31 at the second position.

With the short rails 62b, 63b continued to the linear motion guide rails 23 of the first and second guide rails 21, 31, the pallet 11 moving from the linear motion guide rail 23 can be mounted on the short rail 62b, 63b and the pallet 11 mounted on the short rail 62b, 63b can be moved to the linear motion guide rail 23.

A plurality of the moving guide rails 64 are respectively provided to be perpendicular to the first and second guide rails 21, 31 on parts of the mount 9 beyond both end parts of the first and second guide rails 21, 31. Further, the linear motion block 62c, 63c is mounted on each moving guide rail 64. In this way, the first and second movable rails 62, 63 are movably mounted on the moving guide rails 64.

Further, ball screws 66 are respectively provided along the moving guide rails 64 on the parts of the mount 9 beyond the both end parts of the first and second guide rails 21, 31. Internally threaded members 62d, 63d with which the ball screws 66 are threadably engaged are respectively provided in the movable tables 62a, 63a in the first and second movable rails 62, 63.

Furthermore, drive motors 67 for rotating the ball screws 66 in a forward or reverse direction are provided on the mount 9. By rotating the ball screws 66, the first and second movable rails 62, 63 including the internally threaded members 62d, 63d with which the ball screws 66 are threadably engaged can be reciprocated between the first position continuous with the first guide rail 21 and the second position continuous with the second guide rail 31.

As shown in FIG. 2, each of the first and second movable rails 62, 63 is provided with a contact member 68 with which the short belt 16 of the pallet 11 mounted on the first or second movable rail 62, 63 is in contact.

The contact member 68 in the present embodiment is a rod-like member and mounted on the movable table 62a, 63a via mounting members 68c in parallel to the short rail 62b, 63b. The contact members 68 are provided to be continuous with the circulation belts 42 with the first and second movable rails 62, 63 located at the first and second positions.

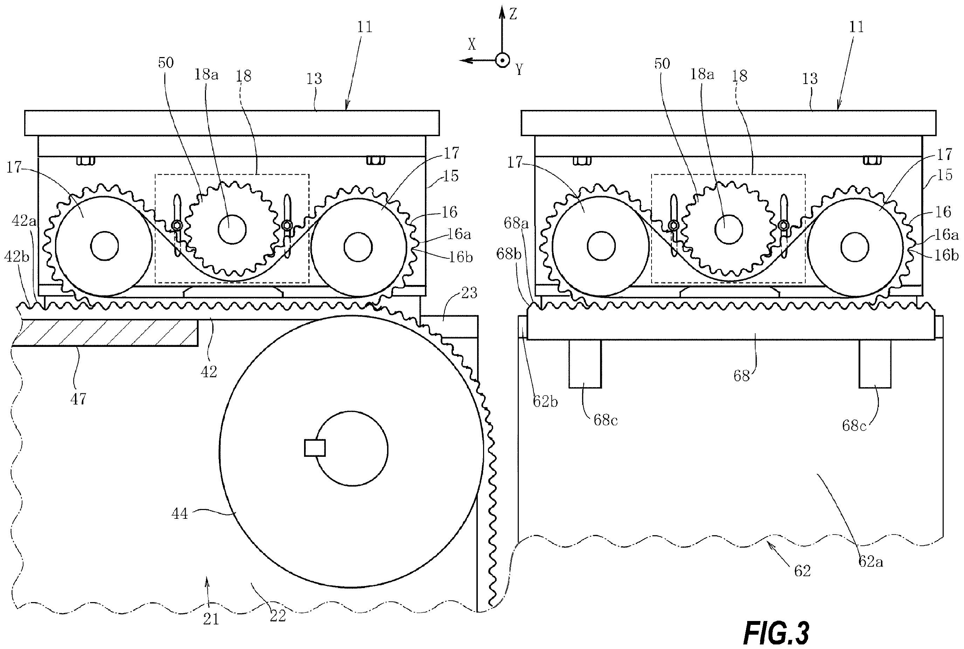

In the present embodiment, the short belt 16 in which the projections and recesses 16a, 16b extending in the width direction are alternately formed one after another in the longitudinal direction is used. Thus, as shown in FIG. 3, the contact member 68 is also formed with recesses and projections 68b, 68a to be meshed with the projections and recesses 16a, 16b of the short belt 16 with the pallet 11 mounted on the short rail 62b, 63b.

Accordingly, if the circulation of the short belt 16 is stopped with the projections and recesses 16a, 16b on the short belt 16 engaged with the recesses and projections 68a, 68b of the contact member 68, a movement in the X-axis direction of the pallet 11 independent of the contact member 68 is prohibited.

Thus, even if the first and second movable rails 62, 63 are moved together with the mounted pallets 11, displacements of the pallets 11 with respect to the first and second movable rails 62, 63 during movements can be prevented by stopping the circulation of the short belts 16.

At the first and second positions, the pallets 11 move on the first and second movable rails 62, 63 if the short belts 16 are circulated.

That is, the pallets 11 are moved from the first and second guide rails 21, 31 to the first and second movable rails 62, 63 or the pallets 11 are moved from the first and second movable rails 62, 63 to the first and second guide rails 21, 31 continuous with the first and second movable rails 62, 63.

Here, the short belt 16 is circulated by driving the self-propelled motor 18 by power.

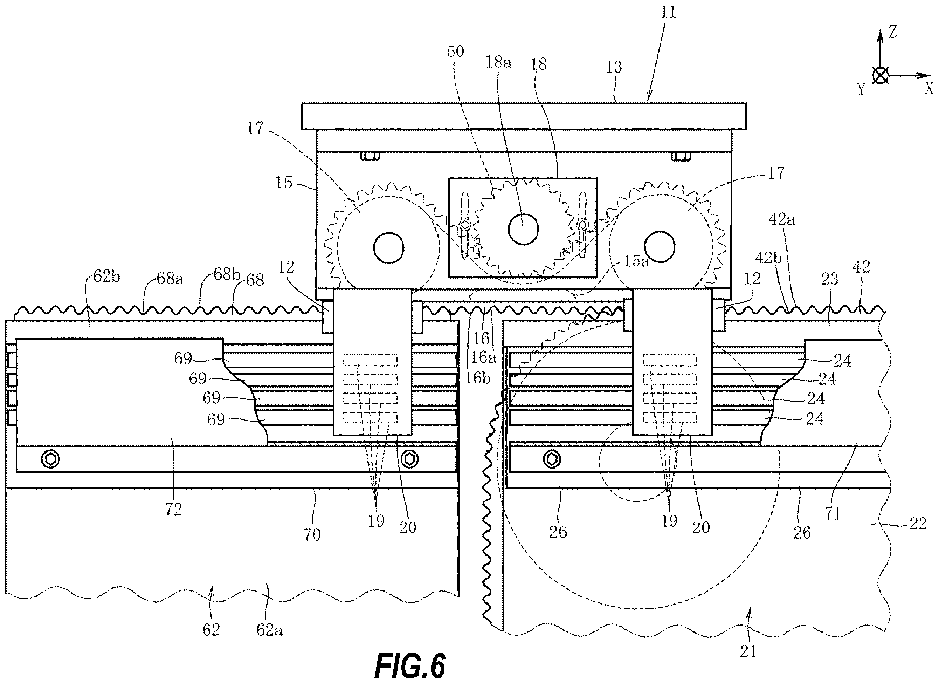

As shown in FIGS. 4 and 6, the pallet 11 is provided with sliding contact terminals 19 for supplying power to the self-propelled motor 18. Further, electrode bands 24 formed to extend in a moving direction of the pallet 11 and configured to contact the sliding contact terminals 19 for energization are formed on both of the first and second guide rails 21, 31.

Specifically, upper parts of insulating boards 20 are attached to the base 15 of the pallet 11 and lower parts of the insulating boards 20 overlap side surfaces of the supporting plates 22 on the first and second guide rails 21, 31 with predetermined clearances defined. Further, the sliding contact terminals 19 are provided on surfaces of the insulating boards 20 facing the supporting plates 22.

In the present embodiment, a case is shown where four sliding contact terminals 19 are provided at predetermined intervals in the vertical direction (Z-axis direction) on a single insulating board 20.

Insulating plates 26 extending in a longitudinal direction are bonded to the side surfaces of the supporting plates 22 on the first and second guide rails 21, 31 to be covered by the lower parts of the insulating boards 20. The electrode bands 24 are formed on the insulating plates 26.

In the present embodiment, the four sliding contact terminals 19 are provided on the single insulating board 20 provided on the pallet 11. Thus, similarly to the sliding contact terminals 19, four electrode bands 24 are formed at predetermined intervals in the vertical direction (Z-axis direction) to extend in the moving direction of the pallet 11.

Although not shown, the control device for supplying a control signal for controlling the self-propelled motor 18 and power for driving the self-propelled motor 18 is connected to the four electrode bands 24. If the self-propelled motor 18 is driven by the power supplied thereto via the electrode bands 24 and the sliding contact terminals 19, the short belt 16 is circulated and the pallet 11 can be self-propelled.

If the pallet 11 is self-propelled along the first or second guide rail 21, 31 by driving the self-propelled motor 18, this pallet 11 moves from the first or second guide rail 21, 31 to the first or second movable rail 62, 63 at the first or second position continuous with the first or second guide rail 21, 31.

As shown in FIG. 6, even if the pallet 11 moves and is mounted on the first or second movable rail 62, 63, the pallet 11 is self-propelled on the first or second movable rail 62, 63. Thus, conduction bands 69 continuous with the electrode bands 24 formed on the first and second guide rails 21, 31 are provided on each of the first and second movable rails 62, 63.

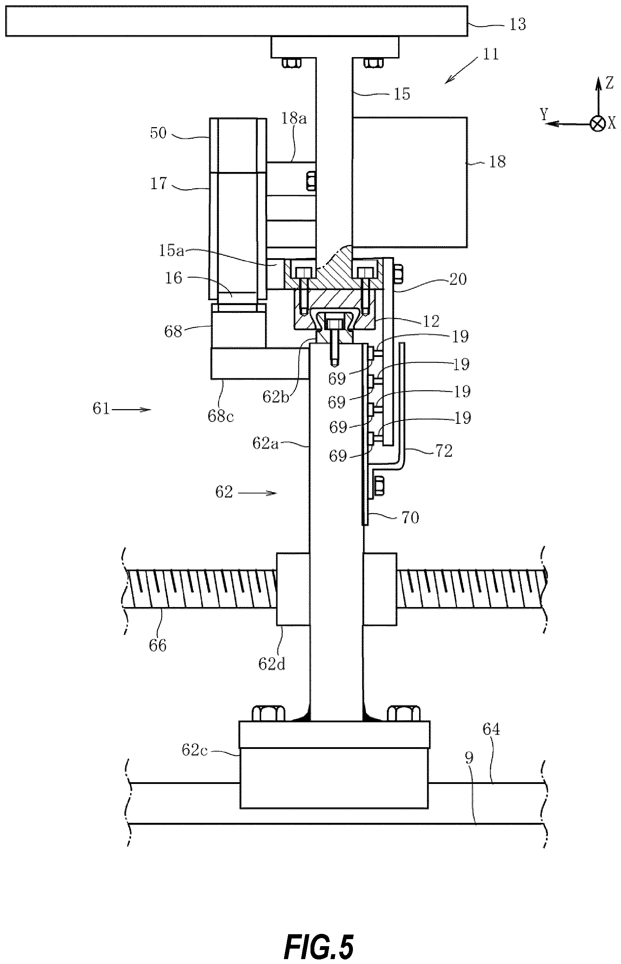

The conduction bands 69 are structured similarly to the electrode bands 24. As shown in FIGS. 5 and 6, insulating plates 70 are bonded to the movable tables 62a, 63a of the first and second movable rails 62, 63 to extend in the longitudinal direction. The conduction bands 69 to be contacted by the sliding contact terminals 19 are provided on the insulating plates 70.

Although not shown, the control device for supplying a control signal for controlling the self-propelled motor 18 and power for driving the self-propelled motor 18 is also connected to the conduction bands 69. The self-propelled motor 18 is driven by the power supplied thereto via the conduction bands 69 and the sliding contact terminals 19.

As shown in FIG. 6, the pallet 11 reciprocates between the first or second guide rail 21, 31 and the first or second movable rail 62, 63. Thus, the sliding contact terminals 19 are provided on both sides in the moving direction of the pallet 11 so that power supply to the self-propelled motor 18 is not interrupted.

Specifically, the upper parts of the insulating boards 20 are respectively mounted on both sides of the base 15 in the moving direction of the pallet 11 and the sliding contact terminals 19 are respectively provided on the insulating boards 20.

Even if the pallet 11 is located between the first or second guide rail 21, 31 and the first or second movable rail 62, 63, any one of the sliding contact terminals 19 inevitably contacts the conduction band 69 or the electrode band 24.

Reference sign 71 of FIGS. 4 and 6 denotes a protection cover 71 mounted on the supporting plate 22 to cover the electrode bands 24 with a clearance, into which the insulating board 20 is insertable, defined. Further, reference sign 72 of FIGS. 5 and 6 denotes an insulating cover 72 mounted on the movable table 62a to cover the conduction bands 69 with a clearance, into which the insulating board 20 is insertable, defined.

Next, a pallet conveying method using the pallet conveying apparatus 10 is described.

If the pallet conveying apparatus 10 is used, the pallet 11 is conveyed in a circulating manner. The pallet conveying method includes a first pallet conveying step of conveying the pallet 11 mounted on the first guide rail 21 along the first guide rail 21, a first pallet moving step of moving the pallet 11 having reached the end part of the first guide rail 21 to the second guide rail 31, a second pallet conveying step of conveying the pallet 11 mounted on the second guide rail 31 along the second guide rail 31 and a second pallet moving step of moving the pallet 11 having reached the end part of the second guide rail 31 to the first guide rail 21.

Each step is described below, assuming that the pallet 11 is circulated on a counterclockwise course in a top view in FIG. 1 in the present embodiment.

### <First Pallet Conveying Step>

In the first pallet conveying step, the pallet 11 mounted on the first guide rail 21 is conveyed.

The pallet 11 of the present embodiment is for carrying a work on which specified processings are performed, and a work is mounted on the pallet 11 mounted on the first guide rail 21. The pallet 11 is provided with a mounting tool for mounting the work and the work is mounted on the pallet 11 via the mounting tool.

The pallet 11 is mounted on the first guide rail 21 by mounting the linear motion blocks 12 of the pallet 11 on an end part of the linear motion guide rail 23.

If the pallet 11 is mounted on the first guide rail 21 in this way, the projections and recesses 16a, 16b of the short belt 16 provided on the pallet 11 are engaged with the recesses and projections 42b, 42a of the circulation belt 42 provided along the first guide rail 21.

If the circulation of the short belt 16 is prohibited and the servo motor 43 serving as a drive mechanism is driven to circulate the circulation belt 42, the pallet 11 locked to the circulation belt 42 moves along the first guide rail 21. In this way, the pallet 11 is conveyed along the first guide rail 21.

As shown in FIG. 1, the pallet 11 is conveyed along the first guide rail 21 until the pallet 11 being conveyed faces each machine tool 1 to 3 provided along the first guide rail 21. By stopping the servo motor 43 with the pallet 11 facing each machine tool 1 to 3, the work mounted on the pallet 11 can be processed by each machine tool 1 to 3.

Here, by conveying a plurality of the pallets 11 at the same pitch as the pitch P of the machine tools 1 to 3, the processings by the plurality of machine tools 1 to 3 can be simultaneously performed.

On the other hand, to cause all the plurality of pallets 11 mounted on the first guide rail 21 to face the machine tools 1 to 3 in the case where pitches P1, P2 of the machine tools 1 to 3 are different, intervals between adjacent ones of the plurality of pallets 11 need to be changed.

Here, even in conventional conveying apparatuses, intervals between adjacent ones of a plurality of pallets can be adjusted by changing locked positions to a circulation belt in locking the pallets to the circulation belt when the plurality of pallets are mounted on a guide rail and conveyed.

However, in the conventional conveying apparatuses, if the plurality of pallets are respectively locked to the circulation belt and the conveyance thereof is started, the intervals between adjacent ones of the plurality of pallets could not be changed during conveyance.

Particularly in recent years, there has been a demand to change intervals between adjacent ones of a plurality of pallets during conveyance. However, the conventional conveying apparatuses for conveying the pallets by circulating the circulation belt could not meet such a demand.

In contrast, in the pallet conveying apparatus 10 of the present embodiment, if one pallet 11 out of a plurality of pallets 11 is, for example, self-propelled separately from and independently of other pallets 11 by circulating the short belt 16 of this pallet 11, intervals between adjacent ones of the plurality of pallets 11 can be changed regardless of whether or not the plurality of pallets 11 are being conveyed.

The short belt 16 is circulated by driving the self-propelled motor 18 by power. Specifically, as shown in FIGS. 4 and 6, the short belt 16 is circulated by the control device supplying a control signal for controlling the self-propelled motor 18 and power for driving the self-propelled motor 18 to the electrode bands 24 formed on the first guide rail 21 to extend in the moving direction of the pallet 11.

If the control signal and power are supplied to the self-propelled motors 18 via the electrode bands 24 and the sliding contact terminals 19, the self-propelled motor 18 of any one of the pallets 11 is driven by the supplied power and the short belt 16 is circulated to self-propel this pallet 11.

In this way, the intervals to the other pallets 11, which are not self-propelled, become longer or shorter, wherefore the intervals between adjacent ones of the plurality of pallets 11 mounted on the first guide rail 21 can be changed.

For example, the pallets 11 having the interval therebetween adjusted can be respectively caused to face the machine tools 2, 3 provided at a relatively wide interval P2 (see FIG. 1).

### <First Pallet Moving Step>

In the first pallet moving step, the pallet 11 having reached the end part of the first guide rail 21 is moved to the second guide rail 31. The pallet 11 is moved by the pallet moving means 61 provided at one end parts of the first and second guide rails 21, 31.

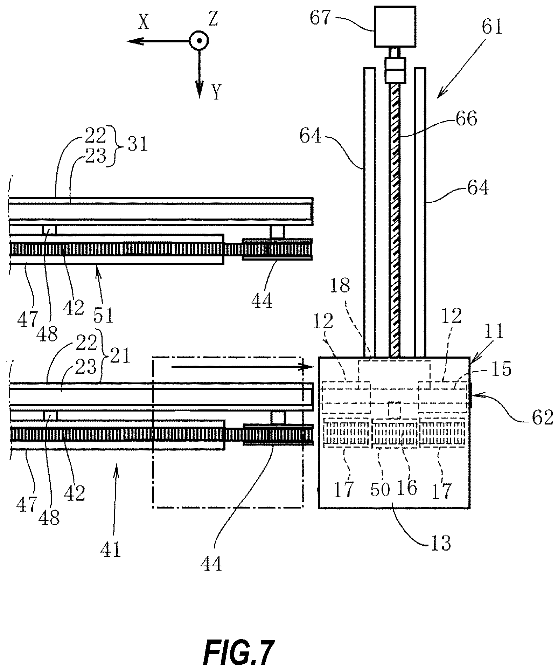

Thus, as shown in FIG. 7, the first movable rail 62 is moved to be continuous with the one end part of the first guide rail 21. The first movable rail 62 is moved by driving the drive motor 67 and rotating the ball screw 66.

When the pallet 11 conveyed by circulating the circulation belt 42 on the first guide rail 21 reaches the end part of the first guide rail 21 as shown by dashed-dotted line in FIG. 7, the circulation of the circulation belt 42 is stopped.

At this time, the circulation of the circulation belt 42 is stopped with the projections and recesses 42a, 42b of the circulation belt 42 continued to the projections and recesses 68a, 68b on the contact member 68 of the first movable rail 62 (see FIG. 6).

Thereafter, the short belt 16 is circulated by driving the self-propelled motor 18 provided on the pallet 11, whereby the pallet 11 having reached the end part of the first guide rail 21 is self-propelled. The pallet 11 is self-propelled by the control device supplying a control signal and power to the electrode bands 24 of the first guide rail 21.

If the pallet 11 is self-propelled, the circulating short belt 16 is engaged with the circulation belt 42 and the contact member 68 continuous with the circulation belt 42. Then, the pallet 11 moves from the first guide rail 21 to the first movable rail 62 as indicated by a solid-line arrow in FIG. 7.

As shown in FIG. 6, a clearance is formed between the circulation belt 42 and the contact member 68. However, by making an interval between the auxiliary pulleys 17, on which the short belt 16 is mounted, larger than an interval between the circulation belt 42 and the contact member 68, the short belt 16 is meshed with both the circulation belt 42 and the contact member 68. Thus, a situation is avoided where the short belt 16 gets into the clearance between the circulation belt 42 and the contact member 68, thereby making it difficult to self-propel the pallet 11.

Further, since a clearance is formed between the first guide rail 21 and the first movable rail 62, a clearance is also formed between the electrode bands 24 and the conduction bands 69.

In contrast, in present embodiment, the upper parts of the insulating boards 20 are respectively mounted on both sides of the base 15 in the moving direction of the pallet 11 and the sliding contact terminals 19 are respectively provided on the insulating boards 20. Thus, even if the pallet 11 is located between the first guide rail 21 and the first movable rail 62, the sliding contact terminals 19 inevitably contact either the conduction bands 69 or the electrode bands 24.

Thus, the self-propelling of the pallet 11 is not interrupted between the first guide rail 21 and the first movable rail 62 and the pallet 11 can be reliably moved to the first movable rail 62.

When the entire pallet 11 is mounted on the first movable rail 62, the driving of the self-propelled motor 18 is stopped to stop the circulation of the short belt 16. In this way, a state where the pallet 11 is mounted on the first movable rail 62 is maintained.

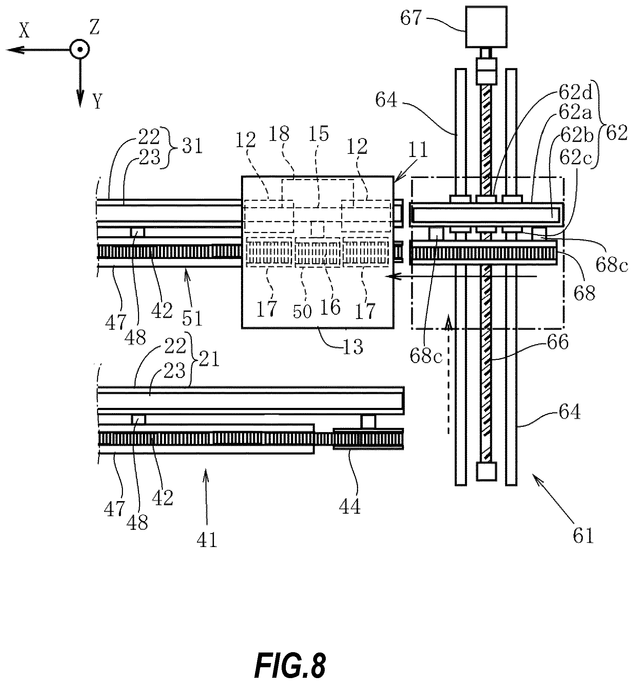

Thereafter, as shown in FIG. 8, the drive motor 67 is driven again to rotate the ball screw 66 and the first movable rail 62 having the pallet 11 mounted thereon is separated from the end part of the first guide rail 21. Then, as shown by a broken-line arrow, the pallet 11 is moved to the one end part of the second guide rail 31 and, when the first movable rail 62 reaches the second position continuous with the second guide rail 31, the rotation of the ball screw 66 is stopped.

During a movement of the first movable rail 62, the projections and recesses 16a, 16b of the short belt 16 on the pallet 11 are engaged with the recesses and projections 68b, 68a on the contact member 68. Thus, by stopping the circulation of the short belt 16, a free movement of the pallet 11 mounted on the first movable rail 62 is prevented.

In this way, it is possible to prevent a movement of the pallet 11 mounted on the first movable rail 62 with respect to the first movable rail 62 while the pallet 11 is moved together with the first movable rail 62.

After the first movable rail 62 reaches the second position and the short rail 62b of the first movable rail 62 reaches the position continuous with the linear motion guide rail 23 of the second guide rail 31, the projections and recesses 42a, 42b of the circulation belt 42 on the second guide rail 31 are continued to the projections and recesses 68a, 68b of the contact member 68 on the first movable rail 62. Then, as shown by a solid-line arrow, the pallet 11 is self-propelled toward the second guide rail 31.

Specifically, the self-propelled motor 18 provided on the pallet 11 is driven again to circulate the short belt 16. Since the projections and recesses 68a, 68b of the contact member 68 on the first movable rail 62 are continuous with the projections and recesses 42a, 42b of the circulation belt 42 on the second guide rail 31, the circulating short belt 16 is engaged with the contact member 68 on the first movable rail 62 and the circulation belt 42 on the second guide rail 31. This causes the pallet 11 to move from the first movable rail 62 to the second guide rail 31.

In this way, the pallet 11 is moved from the end part of the first guide rail 21 to the second guide rail 31.

### <Second Pallet Conveying Step>

In the second pallet conveying step, the pallet 11 mounted on the second guide rail 31 is conveyed along the second guide rail 31.

With the pallet 11 mounted on the second guide rail 31, the projections and recesses 16a, 16b of the short belt 16 on the pallet 11 are engaged with the recesses and projections 42b, 42a of the circulation belt 42 on the second guide rail 31. Thus, by circulating the circulation belt 42 on the second guide rail 31, the pallet 11 can be conveyed along the second guide rail 31.

In the present embodiment, no machine tool is provided along the second guide rail 31. Thus, in the second pallet conveying step, the pallet 11 is conveyed to return to the other end from one end of the second guide rail 31.

Here, a conveying speed of the pallet 11 in the case of stopping the circulation of the short belt 16 and circulating the circulation belt 42 having the short belt 16 locked thereto is equal to a circulation speed of the circulation belt 42. Thus, the conveying speed of the pallet 11 in a state where the circulation of the short belt 16 is stopped does not exceed the conveying speed of the circulation belt 42.

However, in the pallet conveying apparatus 10 of the present embodiment, the pallet 11 is provided with the endless short belt 16 configured to circulate while partially overlapping the circulation belt 42 and the self-propelled motor 18 for circulating the short belt 16. Thus, if the short belt 16 is circulated by driving the self-propelled motor 18, the short belt 16 rolls and moves on the circulation belt 42. That is, the pallet 11 can be self-propelled.

Accordingly, on the second guide rail 31, the circulation belt 42 causes the pallet 11 to self-propel in the conveying direction of the pallet 11 by circulating the short belt 16 on the pallet 11 along with the circulation of the circulation belt 42, whereby the pallet 11 can be conveyed at a speed beyond the circulation speed of the circulation belt 42. In this way, the conveying speed of the pallet 11 can be drastically increased.

### <Second Pallet Moving Step>

In the second pallet moving step, the pallet 11 having reached the end part of the second guide rail 31 is moved to the first guide rail 21. The pallet 11 is moved by the pallet moving means 61 provided at the other end parts of the first and second guide rails 21, 31. A specific moving procedure is the same as in the first pallet moving step.

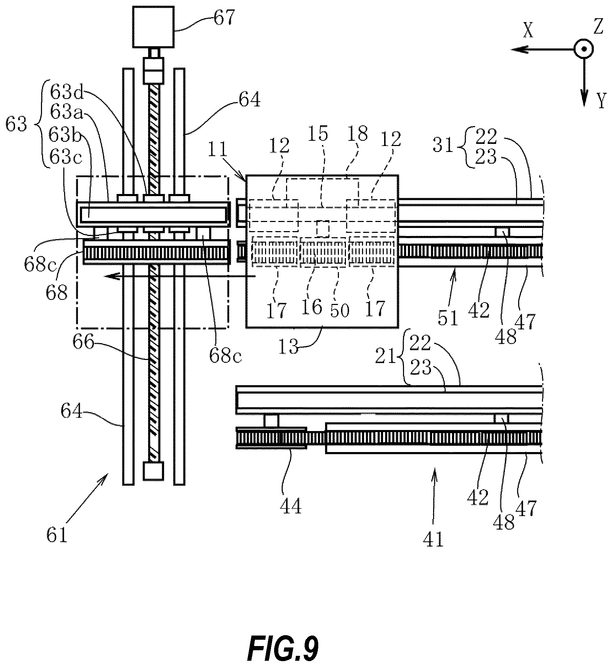

Specifically, as shown in FIG. 9, the second movable rail 63 is moved to be continuous with the other end part of the second guide rail 31. The second movable rail 63 is moved by driving the drive motor 67 and rotating the ball screw 66.

When the pallet 11 conveyed by circulating the circulation belt 42 on the second guide rail 31 reaches the end part of the second guide rail 31, the circulation of the circulation belt 42 is stopped. At this time, the projections and recesses 42a, 42b of the circulation belt 42 are continued to the projections and recesses 68a, 68b of the contact member 68 on the second movable rail 63.

Thereafter, the short belt 16 is circulated by driving the self-propelled motor 18, whereby the pallet 11 having reached the end part of the second guide rail 31 is self-propelled and moved from the second guide rail 31 on the second movable rail 63 as shown by a solid-like arrow.

When the entire pallet 11 is mounted on the second movable rail 63, the driving of the self-propelled motor 18 is stopped and a state where the pallet 11 is mounted on the second movable rail 63 is maintained.

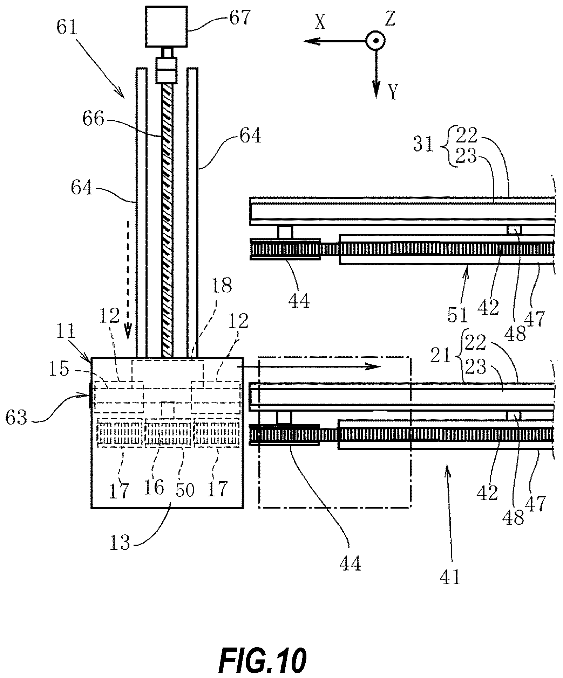

Thereafter, as shown in FIG. 10, the drive motor 67 is driven again to rotate the ball screw 66 and the second movable rail 63 having the pallet 11 mounted thereon is separated from the end part of the second guide rail 31. Then, as shown by a broken-line arrow, the pallet 11 is moved to the other end part of the first guide rail 21 and, when the second movable rail 63 reaches the first position continuous with the first guide rail 21, the rotation of the ball screw 66 is stopped.

During a movement of the second movable rail 63, a free movement of the pallet 11 mounted on the second movable rail 63 with respect to the second movable rail 63 is prevented by stopping the circulation of the short belt 16.

After the second movable rail 63 reaches the first position and the short rail 63b of the second movable rail 63 reaches the position continuous with the linear motion guide rail 23 of the first guide rail 21, the projections and recesses 42a, 42b of the circulation belt 42 on the first guide rail 21 are continued to the projections and recesses 68a, 68b of the contact member 68 on the second movable rail 63. Then, as shown by a solid-line arrow, the pallet 11 is self-propelled toward the first guide rail 21, thereby being moved from the second movable rail 63 to the first guide rail 21.

In this way, the pallet 11 is moved from the end part of the second guide rail 31 to the first guide rail 21.

As just described, each pallet 11 can be conveyed one by one in a counterclockwise direction by performing each of the processings described above once.

By operating each machine tool 1 to 3 every time each step is performed once, predetermined various processings are performed in parallel on each work mounted on each pallet 11. During the operation of each machine tool 1 to 3, the work is loaded onto or unloaded from any one of the pallets 11.

In the present embodiment, the pallet 11 is self-propelled by driving the self-propelled motor 18 and circulating the short belt 16. The sliding contact terminals 19 for supplying power to the self-propelled motor 18 are provided on the pallet 11. Further, the electrode bands 24 to be electrically conductive with the sliding contact terminals 19 are formed on both the first and second guide rails 21, 31.

Thus, a control device for controlling the self-propelled motor 18 needs not be mounted on the pallet 11. Therefore, a weight increase of the pallet 11 due to the mounting of the control device and the complication of the structure of the pallet 11 can be avoided.

It should be noted that a case where the first and second guide rails 21, 31 are provided in parallel to each other at a predetermined distance from each other in the horizontal direction has been described in the above embodiment. However, the pallet conveying apparatus 10 may be configured to include a single guide rail or three or more guide rails provided in parallel to each other at predetermined intervals in the horizontal direction.

In the case of providing three or more guide rails at the predetermined intervals in the horizontal direction, the pallet conveying apparatus 10 is configured such that pallets 11 can be moved and conveyed on any one of a plurality of guide rails by providing movable rails capable of mounting the pallets 11 thereon and movable to an end part of each guide rail.

Further, a case where the circulation belt 42 is a toothed belt has been described in the above embodiment. However, the circulation belt 42 is not limited to the toothed belt if the pallet 11 can be locked thereto.

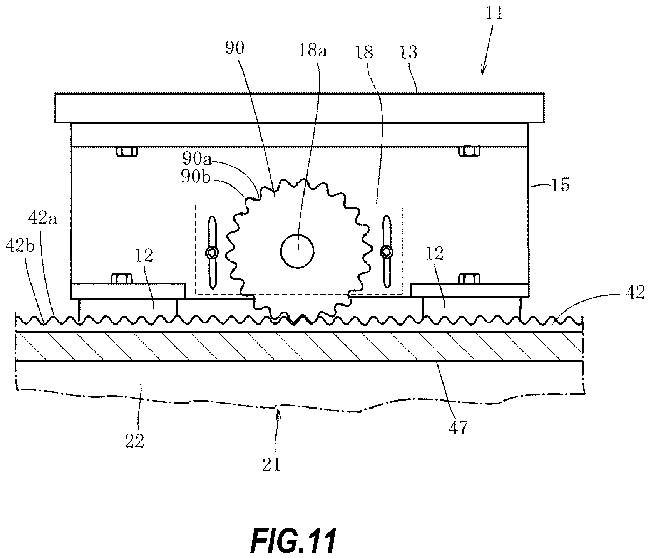

Further, a case where the locking means is the endless short belt 16 configured to circulate while partially overlapping the circulation belt 42 has been described in the above embodiment. However, as shown in FIG. 11, the locking means may be a pulley 90 configured to roll by having an outer periphery held in contact with the circulation belt 42.

Even if the locking means is the pulley 90, the pallet 11 can be self-propelled by the self-propelled motor 18 rotating the pulley 90 as long as the pulley 90 can roll by having the outer periphery held in contact with the circulation belt 42.

If the circulation belt 42 is a toothed belt, the pulley 90 can be meshed with the circulation belt 42 by forming projections and recesses 90a, 90b as meshing teeth to be meshed with the recesses and projections 42b, 42a of the circulation belt 42 on the outer periphery of the pulley 90.

Since the slippage of the pulley 90 with respect to the circulation belt 42 can be prevented according to this, the pallet 11 can be reliably self-propelled.

Further, a case where the contact members 68 provided on the first and second movable rails 62, 63 are formed with the projections and recesses 68a, 68b to be meshed with the recesses and projections 16b, 16a of the short belt 16 has been described in the above embodiment.

However, the contact members 68 may not be formed with the projections and recesses 68a, 68b as long as the pallet 11 can be self-propelled by the rotation or circulation of the pulleys 90 or the short belts 16 of the pallets 11 mounted on the first and second movable rails 62, 63.

Unless the contact members 68 are provided with the projections and recesses 68a, 68b, the projections and recesses 42a, 42b of the circulation belt 42 on the first guide rail 21 or the second guide rail 31 need not be continued to the projections and recesses 68a, 68b on the contact member 68 in mounting the pallets 11 on the first and second movable rails 62, 63. Thus, a control for mounting the pallets 11 on the first and second movable rails 62, 63 is facilitated.

Further, a case where the ball screws 66 are provided on the mount 9 and the first and second movable rails 62, 63 are reciprocated between the first and second positions by rotating the ball screws 66 in the forward or reverse direction by the drive motors 67 has been described in the above embodiment. However, the first and second movable rails 62, 63 may be reciprocated by other means.

For example, rods of fluid pressure cylinders (not shown) provided along the moving guide rails 64 may be attached to the first and second movable rails 62, 63 and caused to project from or move into body portions of the fluid pressure cylinders, whereby the first and second movable rails 62, 63 may be reciprocated between the first and second positions.

Further, a case where the pallets 11 are circulated on the counterclockwise course has been described in the above embodiment. However, if the pallet conveying apparatus 10 includes the first and second guide rails 21, 31 provided side by side, each pallet 11 can be conveyed not only in the counterclockwise direction, but also in a clockwise direction.

As described above, in the pallet conveying apparatus 10 of the present embodiment, the pallet 11 is provided with the pulley 90 configured to roll by having the outer periphery held in contact with the circulation belt 42 or the endless short belt 16 configured to circulate while partially overlapping the circulation belt 42 and the self-propelled motor 18 configured to rotate the pulley 90 or circulate the short belt 16. Thus, if the pulley 90 is rotated or the short belt 16 is circulated by driving the self-propelled motor 18, the pulley 90 or the short belt 16 rolls or moves on the circulation belt 42. In this way, the pallet 11 is self-propelled on the guide rail 21, 31.

Accordingly, if the pallet 11 is self-propelled by rotating the pulley 90 or circulating the short belt 16 along with the circulation of the circulation belt 42, the pallet 11 can be conveyed beyond the circulation speed of the circulation belt 42 and the conveying speed of the pallet 11 can be drastically increased.

Further, if a plurality of the pallets 11 are mounted on the first and second guide rails 21, 31, intervals between adjacent ones of the plurality of pallets 11 can be changed regardless of whether or not the pallets 11 are being conveyed if one pallet 11 of those pallets 11 is self-propelled by rotating the pulley 90 or circulating the short belt 16 provided on this pallet 11. Embodiments of the present invention were described above, but the above embodiments are merely examples of applications of the present invention, and the technical scope of the present invention is not limited to the specific constitutions of the above embodiments.

## Claims

1. A pallet conveying apparatus (10), comprising:
a guide rail (21, 31);
a circulating endless first belt (42) provided along the guide rail (21, 31); and
one, two or more pallets (11) movably mounted on the guide rail (21, 31), the pallet including locking means to be locked to the first belt (42);
wherein:
the pallet (11) mounted on the guide rail (21, 31) is conveyed while being locked to the circulating first belt (42); and **characterised in that**
the locking means is a pulley (90) configured to roll by having an outer periphery held in contact with the first belt (42) or an endless second belt (16) configured to circulate while partially overlapping the first belt (42); and
a motor (18) configured to rotate the pulley (90) or circulate the second belt (16) is provided on the pallet (11).

2. The pallet conveying apparatus (10) according to claim 1, wherein:
the first belt (42) is a toothed belt in which projections and recesses (42a, 42b) extending in a width direction are alternately formed one after another in a longitudinal direction; and
meshing teeth (16a, 16b, 90a, 90b) to be meshed with the recesses and projections (42b, 42a) of the first belt (42) are formed on the outer periphery of the pulley (90) or on an outer surface of the second belt (16).

3. The pallet conveying apparatus (10) according to claim 1 or 2, wherein:
a sliding contact terminal (19) is provided on the pallet (11), the sliding contact terminal (19) being configured to supply power to the motor (18);
an electrode band (24) is provided on the guide rail (21, 31), the electrode band (24) being configured to electrically conduct with the contacting sliding contact terminal (19), the electrode band (24) being formed to extend in a moving direction of the pallet (11).

4. The pallet conveying apparatus (10) according to claim 3, comprising:
first and second guide rails (21, 31) provided side by side;
a first movable rail (62) configured to move between a first position continuous with one end part of the first guide rail (21) and a second position continuous with one end part of the second guide rail (31) while having the pallet (11) mounted thereon; and
a second movable rail (63) configured to move between a first position continuous with the other end part of the first guide rail (21) and a second position continuous with the other end part of the second guide rail (31) while having the pallet (11) mounted thereon;
wherein:
a conduction band (69) to be continued to the electrode band (24) provided on each of the first guide rail (21) and the second guide rail (31) is provided on each of the first movable rail (62) and the second movable rail (63); and
a contact member (68) to be contacted by the pulley (90) or the second belt (16) of the pallet (11) mounted on each of the first movable rail (62) and the second movable rail (63) is provided on each of the first movable rail (62) and the second movable rail (63).

5. A pallet conveying method for conveying a pallet (11) mounted on a guide rail (21, 31) while locking the pallet (11) to a circulating endless first belt (42) provided along the guide rail (21, 31), **characterised by** :
locking the pallet (11) to the first belt (42) with an outer periphery of a pulley (90) provided on the pallet (11) held in contact with the first belt (42) or with a part of an endless second belt (16) provided on the pallet (11) overlapped on the first belt (42); and
self-propelling the pallet (11) by rotating the pulley (90) or circulating the second belt (16) along with or separately from the circulation of the first belt (42).

## Patentansprüche

1. Paletten-Fördervorrichtung (10), umfassend:
eine Führungsschiene (21, 31);
einen umlaufenden endlosen ersten Riemen (42), der entlang der Führungsschiene (21, 31) vorgesehen ist; und
eine, zwei oder mehr Palette/n (11), die beweglich an der Führungsschiene (21, 31) angebracht ist/sind, wobei die Palette eine Arretiereinrichtung zum Arretieren an dem ersten Riemen (42) einschließt;
wobei:
die an der Führungsschiene (21, 31) angebrachte Palette (11) befördert wird und dabei an dem umlaufenden ersten Riemen (42) arretiert ist;
und **dadurch gekennzeichnet, dass**
die Arretiereinrichtung eine Riemenscheibe (90) ist, die so ausgeführt ist, dass sie rollt, indem ein Außenumfang in Kontakt mit dem ersten Riemen (42) oder einem endlosen zweiten Riemen (16) gehalten wird, der so ausgeführt ist, dass er umläuft und dabei den ersten Riemen (42) teilweise überlappt; und
ein Motor (18), der so ausgeführt ist, dass er die Riemenscheibe (90) dreht oder den zweiten Riemen (16) umlaufen lässt, an der Palette (11) vorhanden ist.

2. Paletten-Fördervorrichtung(10) nach Anspruch 1, wobei der erste Riemen (42) ein Zahnriemen ist, an dem Vorsprünge und Vertiefungen (42a, 42b), die sich in einer Breitenrichtung erstrecken, abwechselnd nacheinander in einer Längsrichtung ausgebildet sind; und
eingreifende Zähne (16a, 16b, 90a, 90b), die mit den Vertiefungen und Vorsprüngen (42b, 42a) des ersten Riemens (42) in Eingriff kommen, an dem Außenumfang der Riemenscheibe (90) oder an einer Außenfläche des zweiten Riemens (16) ausgebildet sind.

3. Paletten-Fördervorrichtung(10) nach Anspruch 1 oder 2, wobei
ein Gleitkontakt-Anschluss (19) an der Palette (11) vorhanden ist und der Gleitkontakt-Anschluss (19) so ausgeführt ist, dass er den Motor (18) mit Strom versorgt;
ein Elektroden-Band (24) an der Führungsschiene (21, 31) vorhanden ist, wobei das Elektroden-Band (24) so ausgeführt ist, dass es mit dem kontaktierenden Gleitkontakt-Anschluss (19) elektrisch leitet, wobei das Elektroden-Band (24) so ausgebildet ist, dass es sich in einer Bewegungsrichtung der Palette (11) erstreckt.

4. Paletten-Fördervorrichtung (10) nach Anspruch 3, die umfasst:
eine erste und eine zweite Führungsschiene (21, 31) die nebeneinander vorgesehen sind;
eine erste bewegliche Schiene (62), die so ausgeführt ist, dass sie sich zwischen einer ersten Position, die sich an einen Endteil der ersten Führungsschiene (21) anschließt, und einer zweiten Position bewegt, die sich an einen Endteil der zweiten Führungsschiene (31) anschließt, und dabei die Palette (11) daran angebracht ist; sowie
eine zweite bewegliche Schiene (63), die so ausgeführt ist, dass sie sich zwischen einer ersten Position, die sich an den anderen Endteil der ersten Führungsschiene (21) anschließt, und einer zweiten Position bewegt, die sich an den anderen Endteil der zweiten Führungsschiene (31) anschließt, und dabei die Palette (11) daran angebracht ist;
wobei:
ein Leitungsband (69), das an das Elektroden-Band (24) angeschlossen wird, das jeweils an der ersten Führungsschiene (21) und der zweiten Führungsschiene (31) vorhanden ist, jeweils an der ersten beweglichen Schiene (62) und der zweiten beweglichen Schiene (63) vorhanden ist; und
ein Kontaktelement (68), das mit der Riemenscheibe (90) oder dem zweiten Riemen (16) der Palette (11) in Kontakt gebracht wird, die jeweils an der ersten beweglichen Schiene (62) und der zweiten beweglichen Schiene (63) angebracht ist, jeweils an der ersten beweglichen Schiene (62) und der zweiten beweglichen Schiene (63) vorhanden ist.

5. Paletten-Förderverfahren, mit dem eine an einer Führungsschiene (21, 31) angebrachte Palette (11) befördert wird und dabei die Palette (11) an einem umlaufenden endlosen ersten Riemen (42) arretiert ist, der entlang der Führungsschiene (21, 31) vorgesehen ist,
**gekennzeichnet durch**:
Arretieren der Palette (11) an dem ersten Riemen (42), wobei ein Außenumfang einer an der Palette (11) vorhandenen Riemenscheibe (90) in Kontakt mit dem ersten Riemen (42) oder mit einem Teil eines an der Palette (11) vorhandenen endlosen zweiten Riemens (16) gehalten wird, der den ersten Riemen (42) überlappt; und
eigenständiges Antreiben der Palette (11) durch Drehen der Riemenscheibe (90) oder Umlaufen des zweiten Riemens (16) zusammen mit oder getrennt von dem Umlaufen des ersten Riemens (42).

## Revendications

1. Appareil de transport de palette (10), comprenant :
un rail de guidage (21, 31) ;
un première courroie sans fin en circulation (42) agencée le long du rail de guidage (21, 31); et
une, deux ou plus de deux palettes (11) montées de manière mobile sur le rail de guidage (21, 31), la palette comprenant des moyens de verrouillage pour être verrouillée sur la première courroie (42) ;
dans lequel :
la palette (11) montée sur le rail de guidage (21, 31) est transportée tout en étant verrouillée sur la première courroie en circulation (42) ; et **caractérisé en ce que** les moyens de verrouillage sont une poulie (90) configurée pour rouler en ayant une périphérie extérieure maintenue en contact avec la première courroie (42) ou une seconde courroie sans fin (16) configurée pour circuler tout superposant partiellement la première courroie (42) ; et
un moteur (18) configuré pour faire tourner la poulie (90) ou faire circuler la seconde courroie (16) est agencé sur la palette (11).

2. Appareil de transport de palette (10) selon la revendication 1, dans lequel :
la première courroie (42) est une courroie crantée dans laquelle des saillies et des évidements (42a, 42b) s'étendant dans une direction de largeur sont formés alternativement les uns après les autres dans une direction longitudinale ; et
des dents d'engrènement (16a, 16b, 90a, 90b) à engrener avec les évidements et les saillies (42b, 42a) de la première courroie (42) sont formées sur la périphérie extérieure de la poulie (90) ou sur une surface extérieure de la seconde courroie (16).

3. Appareil de transport de palette (10) selon la revendication 1 ou 2, dans lequel :
une borne de contact coulissant (19) est agencée sur la palette (11), la borne de contact coulissant (19) étant configurée pour alimenter de l'énergie au moteur (18) ;
une bande d'électrode (24) est agencée sur le rail de guidage (21, 31), la bande d'électrode (24) étant configurée pour conduire électriquement en contactant la borne de contact coulissant (19), la bande d'électrode (24) étant formée sur une étendue dans une direction de déplacement de la palette (11).

4. Appareil de transport de palette (10) selon la revendication 3, comprenant :
des premier et second rails de guidage (21, 31) disposés côte à côte ;
un premier rail mobile (62) configuré pour se déplacer entre une première position continue avec une partie d'extrémité du premier rail de guidage (21) et une seconde position continue avec une partie d'extrémité du second rail de guidage (31) tout en ayant la palette (11) montée dessus ; et
un second rail mobile (63) configuré pour se déplacer entre une première position continue avec l'autre partie d'extrémité du premier rail de guidage (21) et une seconde position continue avec l'autre partie d'extrémité du second rail de guidage (31) tout en ayant la palette (11) montée dessus ;
dans lequel :
une bande de conduction (69) destinée à être continue à la bande d'électrode (24) agencée sur chacun des premier rail de guidage (21) et second rail de guidage (31) est agencée sur chacun des premier rail mobile (62) et second rail mobile (63) ; et
un élément de contact (68) destiné à être contacté par la poulie (90) ou la seconde courroie (16) de la palette (11) montée sur chacun des premier rail mobile (62) et second rail mobile (63) est agencé sur chacun des premier rail mobile (62) et second rail mobile (63).

5. Procédé de transport de palette pour transporter une palette (11) montée sur un rail de guidage (21, 31) tout en verrouillant la palette (11) sur une première courroie sans fin en circulation (42) agencée le long du rail de guidage (21, 31), **caractérisé par** le verrouillage de la palette (11) sur la première courroie (42) avec une périphérie extérieure d'une poulie (90) agencée sur la palette (11) maintenue en contact avec la première courroie (42) ou avec une partie d'une seconde courroie sans fin (16) agencée sur la palette (11) superposée sur la première courroie (42) ; et
auto-propulser la palette (11) en faisant tourner la poulie (90) ou en mettant en circulation la seconde courroie (16) ensemble avec la circulation de la première courroie (42), ou séparément de celle-ci.
